(19)

Europäisches
Patentamt
European
Patent Office
Office européen
des brevets

(11) **EP 3 957 679 A1**

(12) **EUROPEAN PATENT APPLICATION**
published in accordance with Art. 153(4) EPC

(43) Date of publication:
**23.02.2022 Bulletin 2022/08**

(21) Application number: **20791084.5**

(22) Date of filing: **10.03.2020**

(51) International Patent Classification (IPC):
*C08J 3/12* (2006.01)     *C08F 20/06* (2006.01)
*C08J 11/10* (2006.01)

(52) Cooperative Patent Classification (CPC):
**C08F 20/06; C08J 3/12;** C08J 11/10; Y02W 30/62

(86) International application number:
**PCT/JP2020/010234**

(87) International publication number:
**WO 2020/213298 (22.10.2020 Gazette 2020/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.04.2019   JP 2019077885
15.10.2019   JP 2019188564**

(71) Applicant: **Sanyo Chemical Industries, Ltd.
Kyoto-shi, Kyoto 605-0995 (JP)**

(72) Inventors:
• **MORITA, Eiji
Kyoto-shi, Kyoto 605-0995 (JP)**
• **MIYAJIMA, Toru
Kyoto-shi, Kyoto 605-0995 (JP)**
• **SUZUKI, Kazumitsu
Kyoto-shi, Kyoto 605-0995 (JP)**

(74) Representative: **Vossius & Partner
Patentanwälte Rechtsanwälte mbB
Siebertstraße 3
81675 München (DE)**

(54) **METHOD FOR PRODUCING WATER-ABSORBING RESIN PARTICLES**

(57)     Provided is a method for efficiently producing recycled water-absorbing resin particles from, as a raw material, discarded water-absorbing resin particles derived from used sanitary supplies, etc., the recycled water-absorbing resin particles having decreased little in absorption property and having various excellent properties. The method for producing water-absorbing resin particles of the present invention comprises a polymerization step (I) in which an aqueous gel containing a crosslinked polymer (A) of a water-soluble vinyl monomer (a1) is obtained, a gel reduction step (II) in which the aqueous gel is reduced into particles to obtain aqueous-gel particles, a step (Va) in which resin particles including the crosslinked polymer (A) and obtained from the aqueous-gel particles are mixed with a surface-crosslinking agent (d), and a reaction step (Vb) in which the surface-crosslinking agent (d) is reacted, wherein a product (B) of decomposition of water-absorbing resin particles including a crosslinked polymer (A') of a water-soluble vinyl monomer (a1') is added in at least one step selected from among the step (I), the step (II), and one or more steps to be performed after the step (II) but before the reaction step (Vb) for surface crosslinking with the surface-crosslinking agent (d).

EP 3 957 679 A1

**Description**

TECHNICAL FIELD

The present invention relates to a method for producing water-absorbent resin particles. More specifically, the present invention relates to a method for producing water-absorbent resin particles that makes it possible in its process to recycle water-absorbent resin particles of used sanitary goods.

BACKGROUND ART

As the used amount of sanitary goods increases, the problem of disposal of waste sanitary goods after use is becoming serious. Sanitary goods, especially disposable diapers, have rapidly spread as indispensable goods in an aging society with fewer children, and the consumption thereof has rapidly increased. Regarding waste disposal of sanitary goods after use, paper diapers and the like are usually incinerated, but since the proportion of moisture in the diapers is close to about 80%, large combustion energy is required for incineration. For this reason, a large load is applied to the incinerator itself in the treatment, which results in a cause of shortening the lifetime of the incinerator. In addition, incineration treatment leads to air pollution and global warming, and also causes a load on the environment. Therefore, improvement is strongly desired.

In order to solve the above problems, studies have been conducted to recover and reuse members from used sanitary goods. Usually, sanitary goods contain absorbers composed of pulp fibers and water-absorbent resin particles, and it is necessary to separate the pulp fibers from the water-absorbent resin particles for reuse as members. However, since the water-absorbent resin particles in the absorber of the used sanitary goods absorb water and results in a swollen gel state, it is difficult to separate the water-absorbent resin particles as they are. For this reason, a technique has been proposed in which water-absorbent resin particles are decomposed and solubilized to separate pulp fibers from solubilized components of the water-absorbent resin particles, and for example, there is a technique in which sanitary goods containing pulp fibers and water-absorbent resin particles are treated with an ozone-containing aqueous solution to decompose and solubilize the water-absorbent resin particles, and then pulp fibers are recovered (Patent Documents 1 and 2). As a technique for decomposing and solubilizing water-absorbent resin particles, a technique using an oxidizing agent such as hydrogen peroxide as means for decomposition (Patent Documents 3 to 5) is known.

PRIOR ART DOCUMENTS

PATENT DOCUMENTS

Patent Document 1: JP-A-2016-881
Patent Document 2: JP-A-2017-209675
Patent Document 3: JP-A-4-317784
Patent Document 4: JP-A-6-313008
Patent Document 5: JP-A-2003-321574

SUMMARY OF THE INVENTION

PROBLEMS TO BE SOLVED BY THE INVENTION

All of the techniques for recycling used sanitary goods described above are intended to recover pulp fibers and utilize the pulp fibers as recycled pulp, and the decomposed and solubilized components of water-absorbent resin particles are discarded or are recycled as solid fuel or the like, and it is difficult to say that those techniques are sufficient from the viewpoint of resource saving and reduction in environmental load. In addition, the conventional technique of decomposing and solubilizing water-absorbent resin particles is intended to provide a disposal method with less environmental load, and there is room for improvement from the viewpoint of recycling.

An object of the present invention is to provide a method for efficiently producing recycled water-absorbent resin particles having small deterioration in absorption characteristics and various superior characteristics by using a waste of water-absorbent resin particles derived from used sanitary goods or the like as a raw material.

SOLUTIONS TO THE PROBLEMS

The present invention is a method for producing water-absorbent resin particles, the method comprising a polymerization step (I) of polymerizing a monomer composition comprising a water-soluble vinyl monomer (a1) and a crosslinking agent (b) to obtain a hydrous gel comprising a crosslinked polymer (A), a gel chopping step (II) of chopping the hydrous gel to obtain hydrous gel particles, a step (Va) of mixing resin particles comprising the crosslinked polymer (A) obtained from the hydrous gel particles with a surface-crosslinking agent (d), and a reaction step (Vb) of reacting with a surface-crosslinking agent (d), wherein a separately prepared decomposition product (B) of water-absorbent resin particles comprising a crosslinked polymer (A') comprising a water-soluble vinyl monomer (a1') and a crosslinking agent (b') as essential constitutional units (hereinafter also referred to as decomposition product (B) of water-absorbent resin particles or decomposition product (B)) that is obtained by treating said water-absorbent resin particles in a step of decomposing the water-absorbent resin particles by a mechanical action and/or a chemical action capable of breaking a chemical bond is added in at least one of the stage of the polymerization step (I), the stage of the gel chopping step (II), and the stage of after the step (II) but before the surface-crosslinking reaction step (Vb) with the surface-crosslinking agent (d).

ADVANTAGES OF THE INVENTION

The method for producing water-absorbent resin particles of the present invention is capable of producing water-absorbent resin particles having less deteriorated absorption characteristics and various superior characteristics even when using in its process a waste of water-absorbent resin particles discharged at the time of recycling of sanitary goods, and contributes to resource saving and reduction in environmental load.

MODE FOR CARRYING OUT THE INVENTION

The method for producing water-absorbent resin particles of the present invention is required to have the above-described essential steps, and may further include other steps unless departing from the gist of the present invention. Further, the process of the present invention may include a transportation stage and a storage stage unless departing from the gist.

The water-soluble vinyl monomer (a1) as used in the present invention is not particularly limited, and there can be used such conventional monomers as vinyl monomers having at least one water-soluble substituent and an ethylenically unsaturated group disclosed in paragraphs 0007 to 0023 of Japanese Patent No. 3648553 (e.g., anionic vinyl monomers, nonionic vinyl monomers, and cationic vinyl monomers), anionic vinyl monomers, nonionic vinyl monomers, and cationic vinyl monomers disclosed in paragraphs 0009 to 0024 of JP-A-2003-165883, and vinyl monomers having at least one group selected from the group consisting of a carboxy group, a sulfo group, a phosphono group, a hydroxy group, a carbamoyl group, an amino group, and an ammonio group disclosed in paragraphs 0041 to 0051 of JP-A-2005-75982.

The water-soluble vinyl monomer (a1) is preferably an anionic vinyl monomer, more preferably a vinyl monomer having a carboxy (salt) group, a sulfo (salt) group, an amino group, a carbamoyl group, an ammonio group or a mono-, di- or tri-alkylammonio group. Among these, vinyl monomers having a carboxy (salt) group or a carbamoyl group are more preferred, (meth)acrylic acid (salt) and (meth)acrylamide are even more preferred, and (meth)acrylic acid (salt) is particularly preferred, and acrylic acid (salt) is most preferred.

The "carboxy (salt) group" means a "carboxy group" or a "carboxylate group", and the "sulfo (salt) group" means a "sulfo group" or a "sulfonate group." The (meth)acrylic acid (salt) means acrylic acid, a salt of acrylic acid, methacrylic acid, or a salt of methacrylic acid and the (meth)acrylamide means acrylamide or methacrylamide. Examples of such salts include salts of alkali metal (lithium, sodium, potassium, etc.), salts of alkaline earth metal (magnesium, calcium, etc.), or ammonium ($NH_4$) salts. Among these salts, salts of alkali metals and ammonium salts are preferred from the viewpoint of absorption characteristics, etc., salts of alkali metals are more preferred, and sodium salts are particularly preferred.

When an acid group-containing monomer such as acrylic acid or methacrylic acid is used as the water-soluble vinyl monomer (a1), a part of the acid group-containing monomer may be neutralized with a base. As a base for neutralization, alkali metal hydroxides, such as sodium hydroxide and potassium hydroxide, and alkali metal carbonates, such as sodium carbonate, sodium bicarbonate, and potassium carbonate, can usually be used. In the step of producing water-absorbent resin particles, the neutralization may be performed either before or during polymerization of the acid group-containing monomer, or after polymerization, the resulting acid group-containing polymer may be neutralized in the state of a hydrous gel containing a crosslinked polymer (A) described later.

When an acid group-containing monomer is used, the degree of neutralization of the acid group is preferably 50 to 80 mol%. When the degree of neutralization is less than 50 mol%, a hydrous gel polymer with high tackiness is to be obtained, so that the workability in production and use may be deteriorated. Moreover, water-absorbent resin particles with a reduced water retention capacity may be obtained. On the other hand, when the degree of neutralization exceeds 80%, a resin with a high pH is to be obtained and the safety to the skin of a human body may be concerned.

In addition to the water-soluble vinyl monomer (a1), an additional vinyl monomer (a2) copolymerizable therewith can be contained as a constitutional unit of the crosslinked polymer (A). The additional vinyl monomer (a2) may be used singly or two or more of the same may be used in combination.

The additional copolymerizable vinyl monomer (a2) is not particularly limited and conventional hydrophobic vinyl monomers (e.g., hydrophobic vinyl monomers disclosed in paragraphs 0028 to 0029 of Japanese Patent No. 3648553, vinyl monomers disclosed in paragraph 0025 of JP-A-2003-165883 and paragraph 0058 of JP-A-2005-75982) can be used, and specifically, for example, the following vinyl monomers (i) to (iii) can be used.

(i) Aromatic ethylenic monomers having 8 to 30 carbon atoms
Styrenes, such as styrene, $\alpha$-methylstyrene, vinyltoluene and hydroxystyrene, vinylnaphthalene, and halogenated forms of styrene, such as dichlorostyrene, etc.
(ii) Aliphatic ethylenic monomers having 2 to 20 carbon atoms
Alkenes (e.g., ethylene, propylene, butene, isobutylene, pentene, heptene, diisobutylene, octene, dodecene, and octadecene), and alkadienes (e.g., butadiene and isoprene), etc.
(iii) Alicyclic ethylenic monomers having 5 to 15 carbon atoms
Monoethylenically unsaturated monomers (e.g., pinene, limonene, and indene); and polyethylenic vinyl monomers (e.g., cyclopentadiene, bicyclopentadiene, and ethylidene norbornene), etc.

From the viewpoint of absorption performance, etc., the content of the additional vinyl monomer (a2) unit is, based on the number of moles of the water-soluble vinyl monomer (a1) unit, preferably 0 to 5 mol%, more preferably 0 to 3 mol%, even more preferably 0 to 2 mol%, and particularly preferably 0 to 1.5 mol%, and from the viewpoint of absorption performance, etc., the content of the additional vinyl monomer (a2) is most preferably 0 mol%.

The crosslinking agent (b) is not particularly limited, and conventional crosslinking agents (e.g., crosslinking agents having two or more ethylenically unsaturated groups, crosslinking agents having at least one functional group capable of reacting with a water-soluble substituent and having at least one ethylenically unsaturated group, and crosslinking agents having at least two functional groups capable of reacting with a water-soluble substituent disclosed in paragraphs 0031 to 0034 of Japanese Patent No. 3648553, crosslinking agents having two or more ethylenically unsaturated groups, crosslinking agents having an ethylenically unsaturated group and a reactive functional group, and crosslinking agents having two or more reactive substituents disclosed in paragraphs 0028 to 0031 of JP-A-2003-165883, crosslinkable vinyl monomers disclosed in paragraph 0059 of JP-A-2005-75982, and crosslinkable vinyl monomers disclosed in paragraphs 0015 to 0016 of JP-A-2005-95759) can be used. Among these, from the viewpoint of absorption performance, etc., crosslinking agents having two or more ethylenically unsaturated groups are preferable, poly(meth)allyl ethers of polyhydric alcohols having 2 to 40 carbon atoms, (meth)acrylates of polyhydric alcohols having 2 to 40 carbon atoms, (meth)acrylamides of polyhydric alcohols having 2 to 40 carbon atoms are more preferable, polyallyl ethers of polyhydric alcohols having 2 to 40 carbon atoms are particularly preferable, and pentaerythritol triallyl ether is most preferable. The crosslinking agent (b) may be used singly or two or more of the same may be used in combination.

Water-absorbent resin particles, while facilitating breakage of molecules by radical species or strong bases and maintaining superior absorption performance, lead to improvement of the efficiency of decomposition and solubilization thereof. In order to facilitate the breakage of the molecule, it is preferable to use a crosslinking agent (b1) having a polyether chain as an essential component in the molecule among the crosslinking agents (b). As for the (b1), one kind of the crosslinking agent (b1) may be used singly, two or more kinds thereof may be used in combination, or a crosslinking agent (b) other than the (b1) may be used in combination.

Examples of the polyether chain include a polyoxyethylene chain, a polyoxypropylene chain, a polyoxytetramethylene chain, and copolymerized polyether chains thereof. Among these, a polyether chain containing a polyoxyethylene chain is preferable from the viewpoint of improving the efficiency of decomposition and solubilization of the water-absorbent resin. In the case of a polyether chain containing a polyoxyethylene chain, the content of an oxyethylene chain in the polyether chain is preferably 50% by weight or more, and a polyoxyethylene polyoxypropylene chain is more preferable. Herein, the polyoxyethylene polyoxypropylene chain is not particularly limited as long as it is a chain constituted of an oxyethylene unit and an oxypropylene unit.

The crosslinking agent (b1) preferably has two or more crosslinkable functional groups of one or more type selected from the group consisting of hydroxyl group, allyl group, acryloyl group, alkoxysilyl group, carboxyl group, epoxy group, isocyano group, N-methylol group, and N-alkoxymethyl group per molecule.

From the viewpoint of improving the efficiency of decomposition and solubilization of the water-absorbent resin, the crosslinkable functional group is preferably an allyl group, an acryloyl group, a vinyl ether group, an alkoxysilyl group, a carboxyl group, or an epoxy group, and more preferably an allyl group, an acryloyl group, or a vinyl ether group.

Specific examples of the crosslinking agent (b1) include ALKOX CP-A1H and ALKOX CP-A2H (both manufactured by Meisei Chemical Works, Ltd.), and A-1000 (polyethylene glycol diacrylate, number average molecular weight: 1108) and A-BPE-30 (diacrylate of 30 mol ethylene oxide adduct of bisphenol A, number average molecular weight: 1133) (both manufactured by SHIN-NAKAMURA CHEMICAL Co., Ltd.). From the viewpoint of decomposability, ALKOX CP-A1H and ALKOX CP-A2H are preferable.

The crosslinking agent (b1) has a polyether chain as an essential component in the molecule, and the number average molecular weight thereof is preferably 100 to 150,000, and more preferably 200 to 100,000 from the viewpoint of improving the efficiency of decomposition and solubilization and from the viewpoint of water absorption performance of the water-absorbent resin particles.

The number average molecular weight (hereinafter abbreviated as Mn) in the present invention is measured by gel permeation chromatography (hereinafter abbreviated as GPC). The measurement shall follow the following measurement conditions.

<GPC measurement conditions>

GPC instrument: HLC-8120GPC manufactured by Tosoh Corporation
Column: two TSKgel GMHXL + TSKgel Multipore HXL-M, manufactured by Tosoh Corporation
Solvent: tetrahydrofuran (THF)
Detection device: refractive index detector
Reference substance: standard polystyrene (TSKstandard POLYSTYRENE) manufactured by Tosoh Corporation

The content (mol%) of the crosslinking agent (b) units is preferably 0.001 to 5, more preferably 0.005 to 3, and particularly preferably 0.01 to 1 based on the number of moles of the water-soluble vinyl monomer (a1) units or, in the case where the additional vinyl monomer (a2) is used, the total number of moles of (a1) and (a2). Within these ranges, the absorption performance is further improved.

The method for producing the water-absorbent resin particles of the present invention comprises a polymerization step (I) of polymerizing a monomer composition comprising the water-soluble vinyl monomer (a1) and the crosslinking agent (b) described above to obtain a hydrous gel comprising a crosslinked polymer (A).

As the polymerization step (I), a hydrous gel containing the crosslinked polymer (A) (a hydrous gel composed of a crosslinked polymer containing water) can be obtained by known solution polymerization (adiabatic polymerization, thin film polymerization, spray polymerization, etc.; JP-A-55-133413, etc.) or known suspension polymerization or inverse phase suspension polymerization (JP-B-54-30710, JP-A-56-26909, JP-A-1-5808, etc.). The crosslinked polymer (A) may be used singly or a mixture of two or more species may be used in combination.

Of the polymerization methods, preferred is the solution polymerization method, and the aqueous solution polymerization method is particularly preferred because it does not need use of an organic solvent, etc. and it is advantageous in production cost aspect, and an adiabatic aqueous solution polymerization method is most preferred in that water-absorbent resin particles having a large water retention capacity and a small amount of water-soluble components are obtained and the temperature control during polymerization is unnecessary.

When performing aqueous solution polymerization, a mixed solvent comprising water and an organic solvent can be used, and examples of the organic solvent include methanol, ethanol, acetone, methyl ethyl ketone, N,N-dimethylformamide, dimethyl sulfoxide, and mixtures of two or more thereof. When performing aqueous solution polymerization, the usage (% by weight) of an organic solvent is preferably 40 or less, and more preferably 30 or less, based on the weight of water.

When using an initiator for polymerization, a conventional initiator for radical polymerization can be used and examples thereof include azo compounds [e.g., azobisisobutyronitrile, azobiscyanovaleric acid, and 2,2'-azobis(2-amidinopropane) hydrochloride], inorganic peroxides (e.g., hydrogen peroxide, ammonium persulfate, potassium persulfate, and sodium persulfate), organic peroxides [e.g., benzoyl peroxide, di-tert-butyl peroxide, cumene hydroperoxide, succinic acid peroxide, and di(2-ethoxyethyl) peroxydicarbonate], and redox catalysts (combinations of a redox agent such as alkali metal sulfite or bisulfite, ammonium sulfite, ammonium bisulfite and ascorbic acid, and an oxidizing agent such as alkali metal persulfates, ammonium persulfate, hydrogen peroxide, and organic peroxides. These catalysts may be used singly and two or more species thereof may be used in combination.

The used amount (% by weight) of the polymerization initiator is preferably 0.0005 to 5, and more preferably 0.001 to 2, based on the weight of the water-soluble vinyl monomer (a1) or, in the case of using an additional vinyl monomer (a2) as well, the total weight thereof.

In polymerization, a polymerization controlling agent represented by a chain transfer agent may be used together as necessary, and specific examples thereof include sodium hypophosphite, sodium phosphite, alkylmercaptans, alkyl halides, and thiocarbonyl compounds. Such polymerization controlling agents may be used singly and two or more species thereof may be used in combination.

The amount (% by weight) of the polymerization controlling agent used is preferably 0.0005 to 5, and more preferably 0.001 to 2, based on the weight of the water-soluble vinyl monomer (a1) or, in the case of using an additional vinyl monomer (a2) as well, the total weight thereof.

When applying a suspension polymerization method or an inverse phase suspension polymerization method as a polymerization method, the polymerization may be carried out in the presence of a dispersing agent or a surfactant as necessary. In the case of an inverse phase suspension polymerization method, the polymerization can be carried out using a hydrocarbon solvent such as xylene, n-hexane, and n-heptane.

The polymerization onset temperature can appropriately be adjusted depending on the type of the catalyst to be used, and it is preferably 0 to 100°C, and more preferably 2 to 80°C.

The gel chopping step (II) is a step of chopping the hydrous gel comprising the crosslinked polymer (A) obtained in the polymerization step to obtain hydrous gel particles. The size (longest diameter) of the hydrous gel particles after the gel chopping step is preferably 50 μm to 10 cm, more preferably 100 μm to 2 cm, and particularly preferably 500 μm to 1 cm. Within these ranges, dryability during a drying step is further improved.

Gel chopping can be performed by a known method, and chopping can be performed using a pulverizing apparatus (e.g., kneaders, universal mixers, single screw or twin screw kneading extruders, mincing machines and meat choppers).

As described above, the hydrous gel of the acid group-containing polymer obtained after polymerization may also be neutralized by mixing a base during the gel chopping step. The base to be used when neutralizing the acid group-containing polymer and a preferred range of the degree of neutralization are the same as those in the case of using an acid group-containing monomer.

The hydrous gel particles obtained in the gel chopping step (II) are preferably obtained as resin particles containing the crosslinked polymer (A) via a drying step (III), a pulverization classification step (IV), or the like before the later-described surface-crosslinking step (Va and Vb described later). Furthermore, other steps may be further included unless departing from the gist of the production method of the present invention. Hereinafter, the production method of the present invention will be described mainly in order with passage of time.

As a method to be applied to the drying step (III) of drying the hydrous gel particles (including distillation of solvent), a method of drying them with hot blast having a temperature of 80 to 300°C, a thin film drying method using a drum dryer heated to 100 to 230°C or the like, a (heating) reduced pressure drying method, a freeze-drying method, a drying method using infrared radiation, decantation, filtration, etc. can be applied, and two or more of them may be used in combination. The heat sources (steam, heat medium, etc.) of these dryers are not particularly limited. The drying method is not particularly limited and may be either a batch drying method or a continuous drying method.

When water is contained in the solvent, the water content (% by weight) after drying is preferably 0 to 20, and more preferably 1 to 10 based on the weight of the crosslinked polymer (A). Within these ranges, the absorption performance is further improved.

The water content can be determined from the weight loss of a sample before and after heating when heating with an infrared moisture content analyzer (JE400 manufactured by KETT, or the like; 120 ± 5°C, 30 minutes, atmosphere humidity before heating: 50 ± 10%RH, lamp specification: 100 V, 40 W).

The method of the pulverization in the pulverization classification step (IV) is not particularly limited and pulverizing apparatuses (e.g., hammer type pulverizer, impact type pulverizer, roll type pulverizer, and jet stream type pulverizer) can be used.

The classification in the pulverization classification step (IV) is performed to control the weight average particle diameter and the particle size distribution of the pulverized resin particles. The classifying apparatus is not particularly limited, and a known means such as a vibration sieve, an in-plane motion sieve, a movable mesh sieve, a forced agitation sieve, or a sonic sieve is used, and a vibration sieve or an in-plane motion sieve is preferably used. The classified resin particles may optionally contain some other components such as a residual solvent and a residual crosslinking component.

The production method of the present invention includes a surface-crosslinking step (V) of surface-crosslinking resin particles comprising the crosslinked polymer (A) with a surface-crosslinking agent. The surface-crosslinking step (V) includes, as essential steps, a step (Va) of mixing resin particles with a surface-crosslinking agent (d), and a reaction step (Vb) of reacting with a surface-crosslinking agent (d).

Therefore, in the production method of the present invention, the stage of after the step (II) and before the surface-crosslinking reaction step (Vb) of reacting with the surface-crosslinking agent (d) may be a drying step (III), a pulverization classification step (IV), a step (Va) of mixing resin particles with a surface-crosslinking agent (d), etc.

As the surface-crosslinking agent (d), there can be used conventional surface-crosslinking agents (e.g., polyglycidyl compounds, polyamines, polyaziridine compounds, polyisocyanate compounds, etc. disclosed in JP-A-59-189103; polyhydric alcohols disclosed in JP-A-58-180233 and JP-A-61-16903; silane coupling agents disclosed in JP-A-61-211305 and JP-A-61-252212; alkylene carbonates disclosed in JP-A-5-508425; polyoxazoline compounds disclosed in JP-A-11-240959; and multivalent metal salts disclosed in JP-A-51-136588 and JP-A-61-257235). Among these surface-crosslinking agents, polyglycidyl compounds, polyhydric alcohols and polyamines are preferred, polyglycidyl compounds and polyhydric alcohols are more preferred, polyglycidyl compounds are particularly preferred, and ethylene glycol diglycidyl ether is most preferred from the viewpoint of economic efficiency and absorption characteristics. The surface-crosslinking agent may be used singly or two or more species thereof may be used in combination.

The amount (parts by weight) of the surface-crosslinking agent used is not particularly limited because it can be varied depending upon the type of the surface-crosslinking agent, the conditions for crosslinking, target performance, etc.; from the viewpoint of absorption characteristics, etc., it is preferably 0.001 to 3, more preferably 0.005 to 2, and particularly preferably 0.01 to 1.5, relative to 100 parts by weight of the resin particles comprising the crosslinked polymer (A).

The surface-crosslinking of the crosslinked polymer (A) has a step (Va) of mixing resin particles comprising the crosslinked polymer (A) with the surface-crosslinking agent (d) and can be performed by heating as necessary. Examples of the method for the mixing include a method of uniformly mixing by use of a mixing apparatus, such as a cylindrical mixer, a screw type mixer, a screw type extruder, a Turbulizer, a Nauter mixer, a double-arm kneader, a fluidization mixer, a V-type mixer, a mincing mixer, a ribbon mixer, an air mixer, a rotating disc mixer, a conical blender, and a roll mixer. Under the present circumstances, the surface-crosslinking agent (d) may be used with dilution with water and/or an arbitrary solvent.

The resin particles comprising the crosslinked polymer (A) are mixed with the surface-crosslinking agent (d), and then the vicinity of the surface of the resin particles is reacted with the (d) in the reaction step (Vb). The water-absorbent resin particles obtained by the production method of the present invention have a structure in which the surface of a resin particle comprising the crosslinked polymer (A) is surface-crosslinked with the surface-crosslinking agent (d). By having the structure of surface-crosslinked with the surface-crosslinking agent, gel blocking can be suppressed and necessary absorption characteristics (balance between water retention capacity and amount of absorption under load) can be controlled. In addition, by the present reaction step, the crosslinking density of the decomposition product (B) increases and sufficient strength can be given to the resin particles. The temperature of the resin particles in the reaction step is preferably equal to or higher than room temperature from the viewpoint of reaction rate. In addition, the powder temperature of the (A) may have reached room temperature or higher by a previous step, but is preferably 100°C or lower.

The heating temperature is preferably 100 to 180°C. Heating at 180°C or lower is advantageous in facility aspect because indirect heating using steam can be employed therefor, whereas at a heating temperature of lower than 100°C, absorption performance may be deteriorated. The heating time can appropriately be set depending on the heating temperature, and from the viewpoint of absorption performance, it is preferably 5 to 60 minutes. The water-absorbent resin particles obtained by surface-crosslinking may be further surface-crosslinked using a surface-crosslinking agent of the same type as or a different type from the surface-crosslinking agent used first.

After crosslinking the surface of the resin particles comprising the crosslinked polymer (A) with the surface-crosslinking agent (d), the particle size is adjusted by screening, if necessary.

The water-absorbent resin particles of the present invention preferably comprise a multivalent metal salt (e). Inclusion of the multivalent metal salt (e) can dramatically improve the absorption performance of the water-absorbent resin particles comprising the decomposition product (B). It is presumed that when the multivalent metal salt (e) has a plurality of multivalent metal atoms, the multivalent metal salt (e) interacts with the water-absorbent resin particles comprising the decomposition product (B) at multiple points to improve absorption performance.

Examples of the multivalent metal salt (e) include inorganic acid salts of zirconium, aluminum or titanium, and examples of the inorganic acid that forms the multivalent metal salt (e) include sulfuric acid, hydrochloric acid, nitric acid, hydrobromic acid, hydroiodic acid, and phosphoric acid. Examples of the inorganic acid salt of zirconium include zirconium sulfate and zirconium chloride, examples of the inorganic acid salt of aluminum include aluminum sulfate, aluminum chloride, aluminum nitrate, ammonium aluminum sulfate, potassium aluminum sulfate and sodium aluminum sulfate, and examples of the inorganic acid salt of titanium include titanium sulfate, titanium chloride and titanium nitrate.

Among these, inorganic acid salts of aluminum are preferable from the viewpoint of improving absorption performance under pressure, and aluminum sulfate, aluminum chloride, potassium aluminum sulfate and sodium aluminum sulfate are more preferable.

From the viewpoint of absorption performance under pressure, the used amount (% by weight) of the multivalent metal salt (e) is preferably 0.05 to 5.0, more preferably 0.2 to 2.0, and particularly preferably 0.35 to 1.5, based on the weight of the crosslinked polymer (A). Herein, when the multivalent metal salt (e) is a hydrate, the mass excluding hydration water is used as the weight thereof.

As for the timing of adding the multivalent metal salt (e), the multivalent metal salt (e) may be added in any step such as the polymerization step (I), the gel chopping step (II), or the surface-crosslinking step (V), but from the viewpoint of improving the absorption performance under pressure, the multivalent metal salt (e) is preferably located on the surface of the resin particles and is preferably added in the surface-crosslinking step (V). When the surface treatment is performed with the surface-crosslinking agent described above, the multivalent metal salt (e) may be added in any timing of the mixing step (Va) before the reaction step of performing the surface treatment by surface-crosslinking, after the reaction step (Vb), or at the same time as the reaction step (Vb). Further, as for the facility and the temperature for mixing the multivalent metal salt (e), the mixing may be performed in the same manner as the surface-crosslinking step described above.

The water-absorbent resin particles may comprise a liquid permeation enhancer, if necessary. The liquid permeation enhancer means a material that treats the surface of water-absorbent resin particles by non-covalent bond interaction (ionic bond, hydrogen bond, hydrophobic interaction, etc.), and is distinguished from the above-described surface-crosslinking agent. The liquid permeation enhancer is contained in the surface of the water-absorbent resin particles and has an action of preventing inter-particle blocking during gel swelling and improving liquid permeability.

Examples of the liquid permeation enhancer include cationic organic polymers, inorganic particles and the multivalent metal salt (e) described above. These may be used singly or in combination.

The cationic organic polymer is not particularly limited, and known cationic organic polymers disclosed as examples in WO 2017-57709 can be used.

Examples of the inorganic particles include hydrophilic inorganic particles and hydrophobic inorganic particles. Examples of the hydrophilic inorganic particles include particles of glass, silica gel, silica (colloidal silica, fumed silica, etc.), clay, etc. Examples of the hydrophobic inorganic particles include particles of carbon fiber, kaolin, talc, mica, bentonite, sericite, asbestos, and shirasu. Among these, hydrophilic inorganic particles are preferable, and silica (colloidal silica, fumed silica, etc.) is most preferable.

From the viewpoint of absorption performance, the used amount (parts by weight) of the liquid permeation enhancer is preferably 0.05 to 5, and more preferably 0.2 to 2.0, based on 100 parts by weight of the water-absorbent resin particles.

The water-absorbent resin particles may contain other additives {e.g., known antiseptics, fungicides, antibacterial agents, antioxidants, ultraviolet absorbers, colorants, fragrances, deodorants, organic fibrous materials, etc. (disclosed in JP-A-2003-225565, JP-A-2006-131767, etc.)}. When such an additive is contained, the content (% by weight) of the additive is preferably 0.001 to 10, more preferably 0.01 to 5, particularly preferably 0.05 to 1, and most preferably 0.1 to 0.5, based on the weight of the crosslinked polymer (A).

In the method for producing water-absorbent resin particles of the present invention, a separately prepared decomposition product (B) is added in at least one of the stage of the polymerization step (I), the stage of the gel chopping step (II), and the stage of after the step (II) but before the surface-crosslinking reaction step (Vb) with the surface-crosslinking agent (d), in other words, in any step before the surface-crosslinking reaction (Vb), whereby absorption performance deteriorated by decomposition can be recovered by the subsequent surface-crosslinking reaction. The decomposition product (B) is a product obtained by treating water-absorbent resin particles in a step of decomposing the water-absorbent resin particles by a mechanical action and/or a chemical action capable of breaking a chemical bond.

Water-absorbent resin particles comprising a crosslinked polymer (A') comprising a water-soluble vinyl monomer (a1') and a crosslinking agent (b') as essential constitutional units can be produced by a method similar to the method for producing the water-absorbent resin particles comprising the crosslinked polymer (A) by polymerizing the monomer composition comprising the water-soluble vinyl monomer (a1) and the crosslinking agent (b) described above. Here, the water-soluble vinyl monomer (a1') and the crosslinking agent (b') may be either the same as or different from (a1) and (b), respectively, but are preferably the same from the viewpoint of the stability of absorption characteristics.

The decomposition product (B) of water-absorbent resin particles is a polymer in which covalent bonds of a crosslinked polymer (A') comprising a water-soluble vinyl monomer (a1') and a crosslinking agent (b') as essential constitutional units are broken by a mechanical action such as shearing and/or a chemical action such as hydrolysis and intramolecular and/or intermolecular chemical bonds are broken. The form of the decomposition product (B) is not particularly limited, and examples thereof include a powdery form, a granular form, a gel form, and an aqueous solution form.

The number average molecular weight of the water solubles of the decomposition product (B) of the water-absorbent resin particles is preferably 500,000 or less from the viewpoint of suppressing deterioration of absorption characteristics of the water-absorbent resin particles. The molecular weight is measured, for example, by using a gel permeation chromatography (1200 Series, manufactured by Agilent Technologies, Ltd.) equipped with a multi angle light scattering detector (DAWN HELEOS II, manufactured by Shoko Scientific Co., Ltd.) (hereinafter abbreviated as GPC-MALS), using an aqueous solution containing 0.5 M acetic acid and 0.2 M sodium nitrate as a solvent, adjusting the sample concentration to 0.2% by weight, using a polymer-based filler (OHpak SB-806M HQ produced by Shoko Scientific Co., Ltd.) as a column stationary phase, and adjusting the column temperature to 40°C.

The content (% by weight) of water solubles of the decomposition product (B) of the water-absorbent resin particles is preferably 20 or more, more preferably 25 or more, and particularly preferably 30 or more from the viewpoint of recycle efficiency of the decomposition product and suppression of deterioration of absorption characteristics of the water-absorbent resin particles. As for the upper limit of the solubles content, the upper limit of the content of solubles in water at 25°C is preferably 90% from the viewpoint of actual treatment. Adjusting to these ranges leads to energy reduction and process time reduction in the decomposition treatment step. Although the decomposition product (B) is composed of a mixture of a water-soluble component and a water-insoluble component, it is also possible to remove the insoluble component and use only the soluble component, but it is preferable to use the decomposition product for recycling without removing one of the components from the viewpoint of recycling the decomposition product. The water soluble content means the weight ratio of the water-soluble component to the whole solid component contained in the decomposition product (B) of the water-absorbent resin particles, and the content of water solubles is measured by the following method.

<Content of water solubles>

One hundred grams of physiological saline (salt concentration: 0.9% by weight) is weighed into a 300 ml plastic container and 1.2 g of water-absorbent resin particles are added to the physiological saline. The container is sealed with plastic wrapping film and then the contents are stirred with a stirrer at a rotation speed of 500 rpm for 3 hours to prepare a water soluble extract in which the water solubles of the water-absorbent resin particles have been extracted. Then, the water solubles extract is filtered using a filter paper produced by ADVANTEC Toyo Kaisha Ltd. (product name: JIS P 3801, No. 2; thickness: 0.26 mm, retaining particle size: 5 $\mu$m). Then, 10 g of the obtained filtrate is weighed and 40 g of ion-exchanged water is added to prepare a sample solution. Hereinafter, a method for measuring the content of water solubles of the water-absorbent resin particles will be described.

Using 50 g of physiological saline (salt concentration: 0.9% by weight) as a blank test solution, titration with an N/50 aqueous KOH solution is carried out until the pH of the saline becomes 10. Then, a titrated amount of the N/50 aqueous KOH solution required until the pH of the saline solution becomes 10 ($[W_{KOH,b}]$ ml) is determined. Then, titration of an N/10 aqueous HCl solution is carried out until the pH of the saline solution becomes 2.7. And then, a titrated amount of the N/10 aqueous HCl solution ($[W_{HCl,b}]$ ml) required until the pH of the saline solution becomes 2.7 is determined.

Next, a concrete description is given to methods for determining a titrated amount of an N/50 aqueous KOH solution required until the pH of a sample solution becomes 10 ($[W_{KOH,S}]$ ml) and a titrated amount of an N/10 aqueous HCl solution required until the pH of a sample solution becomes 2.7 ($[W_{HCl,S}]$ ml) for the sample solution described above.

For example, in the case of water-absorbent resin particles composed of acrylic acid and a sodium salt thereof, the amount of substance of unneutralized acrylic acid $n_{COOH}$ is given by:

$$n_{COOH} \ (mol) \ = \ (W_{KOH,S} \ - \ W_{KOH,b}) \ \times \ (1/50)/1000 \ \times \ 5.$$

In addition, the total amount of substance of acrylic acid $n_{tot}$ is given by:

$$n_{tot} \ (mol) \ = \ (W_{HCl,S} \ - \ W_{HCl,b}) \ \times \ (1/10)/1000 \ \times \ 5.$$

The amount of substance of neutralized acrylic acid $n_{COONa}$ is given by:

$$n_{COONa} \ (mol) \ = \ n_{tot} \ - \ n_{COOH}.$$

Furthermore, the weight of unneutralized acrylic acid $m_{COOH}$ is given by:

$$m_{COOH} \ (g) \ = \ n_{COOH} \ \times \ 72.$$

Further, the amount of substance of neutralized acrylic acid $m_{COONa}$ is given by:

$$m_{COONa} \ (g) \ = \ n_{COONa} \ \times \ 94.$$

Based on the above values and the water content of the water-absorbent resin particles used as a sample ($[W_{H2O}]$ % by weight), a content of water solubles of the water-absorbent resin particles can be calculated by the following calculation formula.

$$\text{Content of water solubles (\% by weight)} = \{(m_{COOH} + m_{COONa}) \times 100\}/\{1.2 \times (100 - W_{H2O})\}$$

Regarding the measurement of the content of water solubles, there is a concern that the measurement is affected by an inorganic acid and/or an organic acid having a carboxylic acid group, a sulfonic acid group, or the like that coexist(s) with the water solubles derived from the water-absorbent resin particles. Therefore, it is necessary to quantify acid components other than the components derived from the water-absorbent resin particles by, for example, a colloid titration method, an ion chromatography method, an ICP emission spectrophotometer, or a fluorescent X-ray measurement method, which are known methods, singly or in combination. More specifically, by producing a calibration curve in advance for each contained acid component, the amount of the acid component contained in the water solubles can be estimated, and the acid component contained can be identified by making a reference to an existing library. The content of water solubles derived from the water-absorbent resin particles can be determined by subtracting the content of the acid component quantified by the method described above from the value measured for the content of water solubles.

Examples of the method for obtaining the decomposition product (B) of water-absorbent resin particles include a method in which water-absorbent resin particles comprising a crosslinked polymer (A') comprising a water-soluble vinyl monomer (a1') and a crosslinking agent (b') as essential constitutional units are subjected to decomposition treatment by at least one method selected from the group consisting of oxidation treatment, photolysis treatment and hydrolysis treatment.

The method of oxidation treatment is not particularly limited as long as water-absorbent resin particles are decomposed by an oxidation action, and examples thereof include ozone treatment described in JP-A-2014-217835, hypochlorous acid (salt) treatment described in JP-A-2013-150977, and oxidation treatment with hydrogen peroxide, persulfuric acid, chlorine or a water-soluble redox agent. The "hypochlorous acid (salt)" means "hypochlorous acid" or "hypochlorite". Examples of the hypochlorite include sodium hypochlorite (NaClO), calcium hypochlorite (Ca(ClO)$_2$) and potassium hypochlorite (KClO).

Examples of the water-soluble redox agent include ascorbic acid, ascorbic acid derivatives, glutathione, catechin and catechinic acid derivatives. Among these, ascorbic acid and ascorbic acid derivatives are preferable from the viewpoint of availability and improvement in solubilization rate. In the present invention, the "water-soluble redox agent" refers to a redox agent having a solubility in water at 20°C of 0.1 g/ml or more, preferably 0.3 g/ml or more.

The ascorbic acid and the ascorbic acid derivatives are not particularly limited as long as they are known, but the ascorbic acid may be any of L-form, D-form, and DL-form, and L-ascorbic acid is preferable from the viewpoint of availability. In addition, the "ascorbic acid derivative" means a derivative obtained by chemically modifying or substituting ascorbic acid and a part thereof. Specific examples of the ascorbic acid derivatives include ascorbic acid phosphate, ascorbic acid sulfate, and ascorbic acid glycoside. Metal (sodium, potassium, magnesium, calcium, etc.) salts and organic (ammonium, amine, etc.) salts of these ascorbic acid and ascorbic acid derivatives can also be used. These ascorbic acid and ascorbic acid derivatives may be used singly or two or more of them may be used in combination.

The catechin and the catechin acid derivatives are not particularly limited as long as they are known, but the catechin may be any of (+)-catechin, (-)-catechin, a racemate, and a catechin hydrate, and (+)-catechin is preferable from the viewpoint of availability. In addition, the "catechin derivative" means a derivative obtained by chemically modifying or substituting catechin and a part thereof. Specific examples of the catechin derivative include gallocatechin, epicatechin and epigallocatechin. Metal (sodium, potassium, magnesium, calcium, etc.) salts and organic (ammonium, amine, etc.) salts of these catechin and catechin derivatives can also be used. These catechin and catechin derivatives may be used singly or two or more of them may be used in combination.

In a method in which decomposition treatment is performed in water by oxidation treatment with a treatment liquid comprising a water-soluble redox agent, the content (% by weight) of the water-soluble redox agent in the treatment liquid is preferably 0.05 to 40, more preferably 1 to 35, and particularly preferably 1 to 30, based on the weight of the water-absorbent resin particles, from the viewpoint of improvement in the solubilization rate of the water-absorbent resin particles. When the content of the water-soluble redox agent is less than 0.05, the solubilization rate may decrease, and when the content is more than 40, it is not economical.

The method for making the water-soluble redox agent to be contained is not limited as long as the water-soluble redox agent is contained at the time of decomposition treatment, and examples thereof include a method in which the water-soluble redox agent is contained in the water-absorbent resin particles in advance, and a method in which the water-soluble redox agent is added before and/or during the decomposition treatment. As for the form when added, it may be added in either a solid or an aqueous solution, and it is preferably added as an aqueous solution from the viewpoint of improving the solubilization rate.

In the method in which decomposition treatment is performed in water by oxidation treatment with a treatment liquid comprising a water-soluble redox agent, the treatment liquid preferably comprises iron ion and/or copper ion in addition to the water-soluble redox agent.

By containing iron ions and/or copper ions, the solubilization rate can be improved. Although a detailed solubilization mechanism is not clear, a mechanism is generally known in which a redox agent such as ascorbic acid generates hydrogen peroxide in the presence of oxygen and iron ions, and the hydrogen peroxide further gives hydroxyl radicals by a Fenton reaction with iron ions. Therefore, also as for the decomposition treatment using the water-soluble redox agent, it is presumed that radical species generated by a similar mechanism decompose and solubilize the crosslinked polymer of the water-absorbent resin particles.

In the decomposition treatment step, from the viewpoint of improvement in the solubilization rate of the water-absorbent resin particles, the content (ppm, w/w) of iron ions and/or copper ions in the treatment liquid is preferably 0.01 to 10000 ppm, more preferably 0.05 to 8000 ppm, and particularly preferably 0.1 to 5000 ppm, based on the weight of the water-absorbent resin particles. When the content of the water-soluble redox agent is less than 0.01 ppm, the solubilization rate decreases, and the efficiency of separation and recovery of pulp fibers and the like may decrease, and when the content is more than 10,000 ppm, it is not economical.

Iron ions and/or copper ions may be impurities contained in the water-absorbent resin particles themselves or other raw materials as long as the content thereof is within the above range. When a raw material for supplying iron ions and/or copper ions is used, such a raw material is not particularly limited as long as it is a water-soluble compound and it dissolves in water to generate iron ions and/or copper ions.

The contents of the iron ions and the copper ions contained in the water-absorbent resin particles themselves or other raw materials can be measured, for example, by heating the raw materials with a microwave sample decomposer in the presence of a strong acid such as hydrochloric acid or nitric acid to dissolve the raw materials, and then measuring the contents with an ICP emission spectrometer (ICP-OES).

Examples of the compound that gives an iron ion include iron chloride(II), iron chloride(III), iron lactate(II), iron sulfate(II), iron sulfate(III), iron phosphate(II), iron phosphate(III), iron iodide(II), iron iodate, potassium ferricyanide, sodium ferricyanide, potassium ferrocyanide, sodium ferrocyanide, ammonium iron citrate, iron cyanide(II), iron oxalate, iron bromide, iron nitrate(II), iron nitrate(III), iron hydroxide(II), and iron hydroxide(III). These compounds may be nonhydrates or hydrates such as monohydrate, dihydrate, trihydrate, tetrahydrate, pentahydrate, hexahydrate, heptahydrate, octahydrate, and nonahydrate.

Examples of the compound that gives a copper ion include copper acetate(I), copper acetate(II), copper chloride(II), copper chloride(III), copper sulfate(I), and copper sulfate(II). These compounds may be nonhydrates or hydrates such as monohydrate, dihydrate, trihydrate, tetrahydrate, pentahydrate, hexahydrate, heptahydrate, octahydrate, and nonahydrate.

In the method of decomposition treating the water-absorbent resin particles in water by oxidation treatment with a water-soluble redox agent, the decomposition product (B) of water-absorbent resin particles is preferably decomposition treated in water with a treatment liquid comprising the water-soluble redox agent and iron ions and/or copper ions from the viewpoint of improvement in solubilization rate. The method for adding water is not particularly limited as long as the water-absorbent resin particles are present in water during the decomposition treatment, and for example, the water-absorbent resin particles may be swollen with water in advance before the decomposition treatment, or water may be added during the decomposition treatment.

An apparatus for the decomposition treatment is not particularly limited as long as it is an apparatus capable of mixing the water-absorbent resin particles with the water-soluble redox agent, and for example, the decomposition treatment may be performed in a stirrable treatment tank.

The temperature at which the decomposition treatment is performed is not particularly limited as long as it is a temperature at which the water-absorbent resin particles are solubilized by a water-soluble redox agent, and is 20 to 100°C, and by increasing the temperature, the time for solubilization can be shortened.

Examples of the method of photolysis treatment include a method of applying ultraviolet rays and a method of applying ultraviolet rays in combination with a photocatalyst such as titanium oxide.

Examples of the method of hydrolysis treatment include a method of decomposing by the action of water in the presence of an acid or alkali. This method is effective when a hydrolyzable functional group such as an ester bond or an amide bond is introduced into a main chain or a crosslinking site of a crosslinked polymer.

The amount (% by weight) of the acid or alkali added to the hydrolysis treatment is preferably 0.001 to 10, more preferably 0.01 to 5, and particularly preferably 0.01 to 3, based on the weight of the crosslinked polymer (A). After the hydrolysis treatment, neutralization treatment may be performed as necessary.

As for the method for obtaining the decomposition product (B) of water-absorbent resin particles, from the viewpoint of simplicity of the decomposition treatment, oxidation treatment is preferred, and a method of oxidation treatment with hypochlorous acid (salt) or a method of oxidation treatment with a water-soluble redox agent are more preferred.

From the viewpoint of resource saving and reduction in environmental load, the decomposition product (B) of water-absorbent resin particles is preferably a decomposition product obtained from water-absorbent resin particles contained in used sanitary goods. Water-absorbent resin particles contained in used sanitary goods will be disposed, and it can be said that the present invention has significance in making such water-absorbent resin particles recyclable.

The sanitary goods are not particularly limited as long as they are sanitary goods comprising water-absorbent resin particles, but generally, the sanitary goods include an absorber composed of pulp fibers and water-absorbent resin particles therein. Specific examples of the sanitary goods include disposable diapers (disposable diaper for children, disposable diaper for adults, etc.), napkins (sanitary napkin, etc.), paper towel, pads (incontinence pad, surgical underpad, etc.), and pet sheets (pet urine absorbing sheet). The sanitary goods are not limited to used products, and final products, intermediate products, etc. also can be used.

Examples of the pulp fibers include pulp fibers conventionally used in sanitary goods such as various fluff pulps and cotton-like pulps. The pulp fibers are not particularly limited with respect to their source material (needle-leaf trees, broadleaf trees, etc.), production method (chemical pulp, semi-chemical pulp, chemithermomechanical pulp, etc.), bleaching method, and form (sheet-form tissue, etc.) are not particularly limited.

When the decomposition product of water-absorbent resin particles is obtained from used sanitary goods, the decomposition product of the water-absorbent resin particles may be recovered from the sanitary goods directly or after pulverizing the sanitary goods in advance and subjecting to decomposition treatment, or the water-absorbent resin particles may be separated and recovered from the sanitary goods and then subjected to a decomposition treatment.

In the case of containing excrements such as urine and feces in the used paper diapers or the like, it is preferable to subject the water-absorbent resin particles to sterilization treatment from the viewpoint of hygiene. The water-absorbent resin particles are sterilized in the decomposition treatment step described above, but when this sterilization is not sufficiently performed, a step of subjecting the water-absorbent resin particles to sterilization treatment may be provided. The sterilization treatment step may be performed before the decomposition treatment step, or may be performed simultaneously with the decomposition treatment step. Specific examples of the step of subjecting the water-absorbent resin particles to sterilization treatment include a high-temperature treatment step of subjecting the water-absorbent resin particles to heat treatment at 100°C or higher, a step of performing ultraviolet irradiation, a step of using a bactericide, and a step of using a gas of an alkylating agent such as ethylene oxide or formaldehyde in the presence of ozone. Examples of the bactericide include an aqueous solution in which ozone is dissolved and hypochlorous acid (salt). The step of subjecting water-absorbent resin particles to sterilization treatment is preferably a step of using a bactericide from the viewpoint of safety, and more preferably a step of using hypochlorous acid (salt).

The oxidation-treated decomposition product (B) may be further subjected to reduction of the water content in the decomposition product with a dehydrating agent.

The dehydrating agent is not particularly limited, and known dehydrating agents, for example, calcium salts or magnesium salts, such as calcium chloride, magnesium chloride and calcium acetate, strong acids such as hydrochloric acid, sulfuric acid and nitric acid, and hydroxy acids such as citric acid, isocitric acid and malic acid can be applied.

The amount of the dehydrating agent added is 0.1 to 20 based on the solid content (% by weight) of the decomposition product (B). It is preferably 0.2 to 10, and more preferably 0.5 to 10. Within these ranges, dehydration efficiently proceeds from the inside of the decomposition product (B), so that handling is easy at the time of recycling. When the amount of the dehydrating agent added is 0.1 or less, dehydration does not proceed efficiently, and it is undesirable that the amount of the dehydrating agent added is 20 or more because, if so, an excessively remaining dehydrating agent inhibits polymerization or crosslinking.

In the method for producing water-absorbent resin particles of the present invention, as described above, the decomposition product (B) of water-absorbent resin particles is added in any step before the surface-crosslinking reaction step (Vb) of reacting with the surface-crosslinking agent (d), that is, at least in one of the steps of, for example, the polymerization step (I), the gel chopping step (II), the drying step (III), the pulverization classification step (IV), and the step (Va) of mixing resin particles with the surface-crosslinking agent (d). Addition at the time of these steps makes it possible to efficiently produce a water-absorbent resin having a small deterioration in absorption characteristics and various superior characteristics. In particular, from the viewpoint of improvement in water absorption performance and stabilization of quality, the decomposition product (B) of water-absorbent resin particles is preferably added in the polymerization step (I) and/or the gel chopping step (II), and it is more preferably added in the gel chopping step (II).

The method of adding the decomposition product (B) of water-absorbent resin particles is not particularly limited as long as it is a method capable of adding the decomposition product in any step before the surface-crosslinking reaction step (Vb) of reacting with the surface-crosslinking agent (d), and examples thereof include a method in which a treatment liquid resulting from decomposition treatment in water is directly added and a method in which the decomposition product having been subjected to decomposition treatment in water and then dried is added.

When the decomposition product (B) of water-absorbent resin particles is added in the polymerization step (I), the decomposition product (B) may be uniformly dissolved in an aqueous acrylic acid solution or may be dispersed in an aqueous acrylic acid solution. The form of the (B) is preferably a gel form or a liquid form. The decomposition product (B) to be added may be subjected to an operation of removing metal ions remaining in the decomposition product (B) in advance using an ion exchange resin or complex ions as necessary, and the content of the remaining metal can be measured by ICP emission spectrometry or the like.

When the decomposition product (B) of water-absorbent resin particles is added in the polymerization step (I), the weight ratio of the decomposition product (B) of water-absorbent resin particles to the water-soluble vinyl monomer (a1) is 5/95 to 95/5, more preferably 5/95 to 80/20, and still more preferably 10/90 to 70/30. Within these ranges, the recycling efficiency and the absorption performance of the water-absorbent resin particles after recycling are favorably obtained.

When the decomposition product (B) of water-absorbent resin particles is added in the gel chopping step (II), the form of the (B) may be a powdery form, a gel form, or a liquid form. The number of times of chopping may be increased or decreased as necessary, or the decomposition product (B) may be added in two or more portions, and from the viewpoint of the absorption performance of the recycled water-absorbent resin particles comprising the (B), it is preferable that the hydrous gel comprising the crosslinked polymer (A) and the (B) are kneaded while being chopped.

The apparatus capable of drying the mixture of the hydrous gel comprising the crosslinked polymer (A) and the decomposition product (B) is not particularly limited, and a concurrent band dryer (tunnel dryer), a ventilated band dryer, spouting stream (nozzle jet) dryer, a ventilated vertical dryer, a box type hot air dryer, etc. are suitably used. A plurality of these may be used in combination.

The heat sources (steam, heat medium, etc.) of these dryers are not particularly limited.

The range of the mixing weight ratio of the hydrous gel comprising the crosslinked polymer (A) to the decomposition product (B) is preferably 99/1 to 10/90, and more preferably 97/3 to 20/80. Within these ranges, the dryability is not impaired and the required water absorption performance can be satisfied.

When the decomposition product (B) of water-absorbent resin particles is added in the gel chopping step (II), it is more preferable to add the decomposition product (B) before and/or simultaneously with the gel chopping. When the decomposition product (B) of water-absorbent resin particles is added in the polymerization step, the polymerization behavior may be adversely affected due to the influence of impurities contained in the decomposition product (B). On the other hand, when the decomposition product (B) is added before and/or simultaneously with the gel chopping, the absorption characteristics are less deteriorated and stable absorption characteristics can be obtained. Here, the gel chopping step refers to a series of steps in which the hydrous gel is charged into a pulverizing apparatus and the pulverizing apparatus is operated to obtain chopped gel, the addition before the gel chopping refers to charging the decomposition product (B) into the pulverizing apparatus in advance before the hydrous gel is charged into the pulverizing apparatus, and the addition simultaneously with the gel chopping refers to simultaneously adding the hydrous gel and the decomposition product (B) to the pulverizing apparatus.

From the viewpoint of recycling efficiency and absorption performance of recycled water-absorbent resin particles, the content (% by weight) of the decomposition product (B) of water-absorbent resin particles is preferably 1 to 50, more preferably 1 to 40, and particularly preferably 1 to 30, based on the total weight of the monomer composition.

The weight average particle diameter ($\mu$m) of the water-absorbent resin particles obtained by the production method of the present invention is preferably 150 to 600, and more preferably 200 to 500 from the viewpoint of absorption performance and handleability.

The weight average particle diameter is measured by the method disclosed in Perry's Chemical Engineers' Handbook, Sixth Edition (McGraw-Hill Book Company, 1984, page 21) by using a RO-TAP screen shaker and standard screens (JIS Z8801-1:2006). Specifically, JIS standard sieves are combined, for example, in the order of 1000 $\mu$m, 850 $\mu$m, 710 $\mu$m, 500 $\mu$m, 425 $\mu$m, 355 $\mu$m, 250 $\mu$m, 150 $\mu$m, 125 $\mu$m, 75 $\mu$m, 45 $\mu$m, and a bottom tray when viewed from the top. About 50 g of particles to be measured are put on the top screen and then shaken for five minutes by a RO-TAP screen shaker. Then, the particles to be measured received on the respective screens and the bottom tray are weighed and the weight fractions of the particles on the respective screens are calculated with the total weight of the particles considered to be 100% by weight. The calculated values are plotted on a logarithmic probability sheet {taking the size of openings of a screen (particle diameter) as abscissa and the weight fraction as ordinate} and then a line connecting the respective points is drawn. Subsequently, a particle diameter that corresponds to a weight fraction of 50% by weight is determined and this is defined as a weight average particle diameter.

The shape of the water-absorbent resin particles is not particularly limited and may be an irregularly pulverized form, a scaly form, a pearl-like form, a rice grain form, etc. Among these, an irregularly pulverized form is preferred because good entangling with a fibrous material in an application such as disposable diaper is ensured and the fear of falling off from the fibrous material is eliminated.

The apparent density (g/ml) of the water-absorbent resin particles is preferably 0.40 to 0.80, more preferably 0.50 to 0.75, and particularly preferably 0.55 to 0.70, from the viewpoint of the absorption performance of sanitary goods. The apparent density is measured at 25°C in accordance with JIS K 7365: 1999.

The water retention capacity (g/g) for physiological saline of water-absorbent resin particles is 20 to 60, and preferably 25 to 55, from the viewpoint of the absorption performance of sanitary goods. The water retention capacity for physiological saline is measured by the following method.

<Water retention capacity for physiological saline>

1.00 g of a measurement sample is put into a tea bag (20 cm long, 10 cm wide) made of nylon net with a size of openings of 63 $\mu$m (JIS Z8801-1:2006) and then is immersed in 1,000 ml of physiological saline (salt concentration: 0.9% by weight) for 1 hour without stirring, followed by draining off water by hanging the sample for 15 minutes. Then, the sample in the tea bag is put in a centrifuge and centrifugally dewatered at 150 G for 90 seconds, thereby removing excess physiological saline. Subsequently, the weight (h1) of the sample including the tea bag is measured and then a water retention capacity is calculated from the following formula.

$$\text{Water retention capacity (g/g) for physiological}$$
$$\text{saline} = (h1) - (h2)$$

The temperature of the physiological saline used and that of the measurement atmosphere are 25°C $\pm$ 2°C. The weight of the tea bag after centrifugal dehydration is measured in the same manner as described above except that the measurement sample is not used and the measured weight is denoted by (h2).
The amount of absorption under load (g/g) of the water-absorbent resin particles is preferably 20 or more. It is undesirable that the amount of absorption under load is less than 20 because, if so, leakage is likely to occur during repeated use. The upper limit is preferably 27 or less from the viewpoint of performance balance with other physical properties and productivity although the upper limit is preferably as high as possible and not particularly limited. The amount of absorption under load can be appropriately adjusted by the types and the amounts of the crosslinking agent (b) and the surface-crosslinking agent (d). Therefore, for example, when it is necessary to increase the amount of absorption under load, it can be easily realized by increasing the used amount of the crosslinking agent (b) and the surface-crosslinking agent (d) .

<Method for measuring the amount of absorption under load>

Into a cylindrical plastic tube (inner diameter: 25 mm, height: 34 mm) with a nylon net having a size of openings of 63 $\mu$m (JIS Z8801-1:2006) attached to the bottom of the tube, there is weighed 0.16 g of a measurement sample screened into a range of 250 to 500 $\mu$m using standard screens, and then the cylindrical plastic tube is made to stand vertically and the measurement sample is leveled to have an almost uniform thickness on the nylon net and then a weight (weight: 310.6 g, outer diameter: 24.5 mm) is put on the measurement sample. The weight (M1) of the cylindrical plastic tube as a whole is measured, and then the cylindrical plastic tube containing the measurement sample and the weight is made to stand in a petri dish (diameter: 12 cm) containing 60 ml of physiological saline (salt concentration: 0.9%) and is immersed with the nylon net side facing down and is left standing for 60 minutes. After a lapse of 60 minutes, the cylindrical plastic tube was pulled up from the petri dish and then was inclined to concentrate the water attaching to the bottom of the tube to drip in the form of water drops, thereby removing excess water. Then, the weight (M2) of the cylindrical plastic tube containing the measurement sample and the weight as a whole was measured and then the amount of absorption under load is determined from the following formula. The temperature of the physiological saline used and that of the measurement atmosphere are 25°C $\pm$ 2°C.

$$\text{The amount (g/g) of absorption under load} = \{(M2) - (M1)\}/0.16$$

EXAMPLES

The present invention is further described below by means of Examples and Comparative Examples, but the present invention is not limited thereto. Unless otherwise stated, "part(s)" means "part(s) by weight" and "%" means "% by weight."

<Production Example 1>

157 parts (2.18 parts by mol) of acrylic acid, 0.6305 parts (0.0024 parts by mol) of a crosslinking agent (b) {pentaerythritol triallyl ether}, and 344.65 parts of deionized water were kept at 3°C while being stirred and mixed. After adjusting the dissolved oxygen amount to 1 ppm or less by introducing nitrogen into this mixture, 0.63 parts of a 1% aqueous hydrogen peroxide solution, 1.1774 parts of a 2% aqueous ascorbic acid solution, and 2.355 parts of a 2% aqueous 2,2'-azobis[2-methyl-N-(2-hydroxyethyl)-propionamide] solution were added and mixed, so that polymerization was initiated. After the temperature of the mixture reached 90°C, polymerization was performed at 90 ± 2°C for about 5 hours, thereby affording hydrous gel (1). Then, while chopping 502.27 parts of the hydrous gel (1) with a mincing machine, 128.42 parts of a 48.5% aqueous sodium hydroxide solution was added and mixed, thereby affording hydrous gel particles. Further, the hydrous gel particles were dried in a through-air band dryer (150°C, wind speed: 2 m/sec), affording a dried material. The dried material was pulverized with a juicing blender and then adjusted it into a particle diameter range of from 710 to 150 $\mu$m, thereby affording dried material particles (1). While stirring 100 parts of the dried material particles (1) at a high speed, 0.5 parts of sodium aluminum sulfate dodecahydrate (sodium alum) as a multivalent metal salt (e) and 5.00 parts of a 2% solution of ethylene glycol diglycidyl ether in a water/methanol mixed solvent (weight ratio of water/methanol = 70/30) were added thereto by spraying and mixed, and the resulting mixture was allowed to stand at 150°C for 30 minutes for surface-crosslinking, thereby affording water-absorbent resin particles (P-1). The weight average particle diameter of (P-1) was 400 $\mu$m.

<Production Example 2>

30.0 g of the water-absorbent resin particles (P-1) obtained in Production Example 1 were put in a PE wide-mouth bottle 10L (manufactured by SANPLATEC Corporation), and 1500 ml of ion-exchanged water in which 5.0 g of ascorbic acid (manufactured by FUJIFILM Wako Pure Chemical Corporation) and 0.7 g of iron(II) sulfate heptahydrate (manufactured by FUJIFILM Wako Pure Chemical Corporation) were dissolved was further added and allowed to stand for 20 minutes, thereby swelling the water-absorbent resin particles. Then, the water-absorbent resin particles in a swollen state were dispersed and homogenized at 1500 rpm for 10 minutes using a homogenizer (product name: EXCEL AUTO HOMOGENIZER, manufactured by NIHONSEIKI Kaisha Ltd.). While the swollen water-absorbent resin particles attached to the homogenizer were collected, the homogenizer was removed, and then the upper part of the PE wide-mouth bottle was covered with a PVCA film (Saran film), and the PVCA film was fixed with a rubber band so as not to come off, thereby forming a sealed state. Subsequently, this was allowed to stand for 10 hours in a thermostat (model: IG401, manufactured by Yamato Scientific Co., Ltd.) set at 70°C to perform decomposition treatment of the water-absorbent resin particles. After the decomposition treatment, the obtained treatment liquid was freeze-dried, affording a decomposition product (B-1) of the water-absorbent resin particles. The content of water solubles of (B-1) was 82% by weight.

<Production Example 3>

30.0 g of the water-absorbent resin particles (P-1) obtained in Production Example 1 were put in a PE wide-mouth bottle 10L (manufactured by SANPLATEC Corporation), and 1500 ml of ion-exchanged water in which 5.0 g of ascorbic acid (manufactured by FUJIFILM Wako Pure Chemical Corporation) and 0.7 g of iron(II) sulfate heptahydrate (manufactured by FUJIFILM Wako Pure Chemical Corporation) were dissolved was further added and 30.0 g of a 1.0 wt% aqueous sodium hypochlorite solution was further added as a bactericide, and allowed to stand for 20 minutes, thereby swelling the water-absorbent resin particles. Then, the upper part of the PE wide-mouth bottle was covered with a PVCA film (Saran film), and the PVCA film was fixed with a rubber band so as not to come off, thereby forming a sealed state. Subsequently, this was allowed to stand for 10 hours in a thermostat (model: IG401, manufactured by Yamato Scientific Co., Ltd.) set at 70°C to perform decomposition treatment of the water-absorbent resin particles. After the decomposition treatment, the obtained treatment liquid was freeze-dried, affording a decomposition product (B-2) of water-absorbent resin particles. The content of water solubles of (B-2) was 79% by weight. This content of water solubles is a value obtained by subtracting the quantified amount of the acid component from a measured value of the content of water solubles.

<Production Example 4>

5.0 g of the water-absorbent resin particles (P-1) obtained in Production Example 1 were separated into 1.000-gram portions each in a tea bag (20 cm long, 10 cm wide) formed of nylon net having a mesh size of 63 $\mu$m (JIS Z 8801-1: 2006), and each of them was transferred to a 1 L conical beaker (model: 010050-100061A: manufactured by AS ONE Corporation) containing 500 ml of 0.9 wt% physiological saline and 1.0 g of 1.0 wt% aqueous sodium hypochlorite solution, and allowed to stand for 60 minutes, thereby swelling the water-absorbent resin particles. Then, the whole tea bag was transferred to a 1 L conical beaker (the same as above) containing 500 ml of a 1.0 wt% aqueous calcium chloride solution and allowed to stand for 60 minutes, then the whole tea bag was placed in a centrifugal separator, and centrifugally dehydrated at 150 G for 90 seconds to remove excessive water, thereby affording a decomposition product (B-3) of the water-absorbent resin particles. The content of water solubles of (B-3) was 32% by weight. This content of water solubles is a value obtained by subtracting the quantified amount of the acid component from a measured value of the content of water solubles. The average water retention capacity at this time was 3 (g/g).

<Production Example 5>

5.0 g of the water-absorbent resin particles (P-1) obtained in Production Example 1 were separated into 1.000-gram portions each in a tea bag (20 cm long, 10 cm wide) formed of nylon net having a mesh size of 63 $\mu$m (JIS Z 8801-1: 2006), and each of them was transferred to a 1 L conical beaker (model: 010050-100061A: manufactured by AS ONE Corporation) containing 500 ml of 0.9 wt% physiological saline and 1.0 g of 1.0 wt% aqueous sodium hypochlorite solution, and allowed to stand for 60 minutes, thereby swelling the water-absorbent resin particles. Then, the swollen water-absorbent resin particles were taken out from the tea bag, spread on a stainless steel tray (20 cm × 50 cm) so as to be as uniform as possible, and allowed to stand in a dryer set at 150°C for 1 hour to dry, affording a decomposition product (B-4) of the water-absorbent resin particles. The content of water solubles of (B-4) was 33% by weight. This content of water solubles is a value obtained by subtracting the quantified amount of the acid component from a measured value of the content of water solubles.

<Production Example 6>

5.0 g of the water-absorbent resin particles (P-1) obtained in Production Example 1 were separated into 1.000-gram portions each in a tea bag (20 cm long, 10 cm wide) formed of nylon net having a mesh size of 63 $\mu$m (JIS Z 8801-1: 2006), and each of them was transferred to a 1 L conical beaker (model: 010050-100061A: manufactured by AS ONE Corporation) containing 500 ml of 0.9 wt% physiological saline and 1.0 g of 1.0 wt% aqueous sodium hypochlorite solution, and allowed to stand for 60 minutes, thereby swelling the water-absorbent resin particles. Then, the whole tea bag was transferred to a 1 L conical beaker (the same as above) containing 500 ml of a 1.0 wt% aqueous calcium chloride solution and allowed to stand for 60 minutes, then the whole tea bag was placed in a centrifugal separator, and centrifugally dehydrated at 150 G for 90 seconds to remove excessive water. The resulting product was allowed to stand in a dryer set at 150°C for 1 hour to dry, affording a decomposition product (B-5) of the water-absorbent resin particles. The content of water solubles of (B-5) was 33% by weight. This content of water solubles is a value obtained by subtracting the quantified amount of the acid component from a measured value of the content of water solubles. The average water retention capacity at this time was 3 (g/g).

<Production Example 7>

5.0 g of the water-absorbent resin particles (P-1) obtained in Production Example 1 were separated into 1.000-gram portions each in a tea bag (20 cm long, 10 cm wide) formed of nylon net having a mesh size of 63 $\mu$m (JIS Z 8801-1: 2006), and each of them was transferred to a 1 L conical beaker (model: 010050-100061A: manufactured by AS ONE Corporation) containing 500 ml of 0.9 wt% physiological saline and 1.0 g of 1.0 wt% aqueous sodium hypochlorite solution, and allowed to stand for 60 minutes, thereby swelling the water-absorbent resin particles. Subsequently, a 1N aqueous sodium hydroxide solution was added such that the pH of the aqueous solution was 7.0. The swollen water-absorbent resin particles were taken out from the tea bag, spread on a stainless steel tray (20 cm × 50 cm) so as to be as uniform as possible, and allowed to stand in a dryer set at 150°C for 1 hour to dry, affording a decomposition product (B-6) of the water-absorbent resin particles. The content of water solubles of (B-6) was 35% by weight.

<Production Example 8>

157 parts (2.18 parts by mol) of a water-soluble vinyl monomer (a1) {acrylic acid}, 310 parts (0.0031 parts by mol) of an internal crosslinking agent (b-1) {ALKOX CP-A1H; number of crosslinkable functional groups: 23, number average molecular weight: 100,000; manufactured by Meisei Chemical Works, Ltd.}, and 344.65 parts of deionized water were kept at 3°C while being stirred and mixed. After adjusting the dissolved oxygen amount to 1 ppm or less by introducing nitrogen into this mixture, 0.63 parts of a 1% aqueous hydrogen peroxide solution, 1.1774 parts of a 2% aqueous ascorbic acid solution, and 2.355 parts of a 2% aqueous 2,2'-azobis[2-methyl-N-(2-hydroxyethyl)-propionamide] solution were added and mixed, so that polymerization was initiated. After the temperature of the mixture reached 90°C, polymerization was performed at 90 ± 2°C for about 5 hours, thereby affording hydrous gel (2). Then, while chopping 502.27 parts of the hydrous gel (2) with a mincing machine, 128.42 parts of a 48.5% aqueous sodium hydroxide solution was added and mixed, thereby affording hydrous gel particles. Further, the hydrous gel particles were dried in a through-air band dryer (150°C, wind speed: 2 m/sec), affording a dried material. The dried material was pulverized with a juicing blender and then adjusted it into a particle diameter range of from 710 to 150 $\mu$m, thereby affording dried material particles (2). While stirring 100 parts of the dried material particles at a high speed, 0.5 parts of sodium aluminum sulfate dodecahydrate (sodium alum) as a multivalent metal salt (e) and 5.00 parts of a 2% solution of ethylene glycol diglycidyl ether in a water/methanol mixed solvent (weight ratio of water/methanol = 70/30) were added thereto by spraying and mixed, and the resulting mixture was allowed to stand at 150°C for 30 minutes for surface-crosslinking, thereby affording water-absorbent resin particles (P-2). The weight average particle diameter of (P-2) was 400 μm.

<Production Example 9>

5.0 g of the water-absorbent resin particles (P-2) obtained in Production Example 8 were transferred to a 1 L conical beaker (model: 010050 -100061A, manufactured by AS ONE Corporation), and 150 g of 0.9 wt% physiological saline and 1 ml of a 1N aqueous sodium hydroxide solution were further added to swell the water-absorbent resin particles. Subsequently, this was allowed to stand for 20 hours in a thermostat (model: IG401, manufactured by Yamato Scientific Co., Ltd.) set at 80°C to perform decomposition treatment of the water-absorbent resin particles, thereby affording a decomposition product (B-7) of the water-absorbent resin particles. The content of water solubles of (B-7) was 79% by weight.

<Production Example 10>

For a commercially available diaper (Product name "Attento thin dry touch pants" M to L sizes, manufactured by Daio Paper Corporation) after urination, the entire diaper was washed using 2 L of ion-exchanged water and then chopped with scissors, and the swollen water-absorbent resin particles contained in the diaper were taken out in a state of being mixed with pulp. 100 g of the mixture of swollen water-absorbent resin particles and pulp was transferred to a 3LPE wide-angle bottle (model: 2088, manufactured by SANPLATEC Corporation) containing 1500 ml of 0.9 wt% physiological saline and 3.0 g of 1.0 wt% aqueous sodium hypochlorite solution, and allowed to stand for 60 minutes. The mixture was immersed in 2 L of a 1.0 wt% calcium chloride solution for 60 minutes and then taken out, and then the water-absorbent resin particles were separated from the pulp using the difference in specific gravity, thereby affording a decomposition product (B-8). The content of water solubles of (B-8) was 31% by weight. This content of water solubles is a value obtained by subtracting the quantified amount of the acid component from a measured value of the content of water solubles.
The water retention capacity of the water-absorbent resin particles at this time was 3 g/g.

<Example 1>

Dried material particles were obtained by performing the same operations as those of Production Example 1 except, in Production Example 1, changing the quantity of acrylic acid form 157 parts to 141.3 parts and the quantity of a 48.5% aqueous sodium hydroxide solution from 128.42 parts to 115.58 parts, and dissolving 14.1 parts of the decomposition product (B-1) in 344.65 parts of deionized water in advance and using the resulting aqueous solution for polymerization. Subsequently, water-absorbent resin particles (P-3) were obtained by performing the same operations as those of Production Example 1 except, in the surface-crosslinking step, changing the quantity of the 2% solution of ethylene glycol diglycidyl ether in a water/methanol mixed solvent (weight ratio of water/methanol = 70/30) from 5.00 parts to 6.50 parts.

<Example 2>

452.04 parts of the hydrous gel (1) obtained in Production Example 1 and 14.1 parts of the decomposition product (B-1) were mixed, and then while the mixture was chopped with a mincing machine, 115.58 parts of a 48.5% aqueous sodium hydroxide solution was added and mixed, thereby affording hydrous gel particles. Further, the hydrous gel particles were dried in a through-air band dryer (150°C, wind speed: 2 m/sec), affording a dried material. Subsequently, water-absorbent resin particles (P-4) were obtained by performing the same operations as those of Production Example 1 except, in the surface-crosslinking step, changing the quantity of the 2% solution of ethylene glycol diglycidyl ether in a water/methanol mixed solvent (weight ratio of water/methanol = 70/30) from 5.00 parts to 7.00 parts.

<Example 3>

While 452.04 parts of the hydrous gel (1) obtained in Production Example 1 were chopped with a mincing machine, 115.58 parts of a 48.5% aqueous sodium hydroxide solution was added and mixed, affording hydrous gel particles. The obtained hydrous gel particles were mixed with 14.1 parts of the decomposition product (B-1) and then dried in a through-air band dryer (150°C, wind speed: 2 m/sec), affording a dried material. Subsequently, water-absorbent resin particles (P-5) were obtained by performing the same operations as those of Production Example 1 except, in the surface-crosslinking step, changing the quantity of the 2% solution of ethylene glycol diglycidyl ether in a water/methanol mixed solvent (weight ratio of water/methanol = 70/30) from 5.00 parts to 7.00 parts.

<Example 4>

Water-absorbent resin particles (P-6) were obtained by performing the same operations as those of Example 1 except changing 14.1 parts of the decomposition product (B-1) to 14.1 parts of the decomposition product (B-2).

<Example 5>

Water-absorbent resin particles (P-7) were obtained by performing the same operations as those of Example 2 except changing 14.1 parts of the decomposition product (B-1) to 14.1 parts of the decomposition product (B-2).

<Example 6>

Water-absorbent resin particles (P-8) were obtained by performing the same operations as those of Example 2 except changing 14.1 parts of the decomposition product (B-1) to 14.1 parts of the decomposition product (B-3).

<Example 7>

100 parts of the dried material obtained in Production Example 1 was pulverized with a juicing blender, and then 10 parts of the decomposition product (B-3) was added at the time of adjusting the particle diameter to a particle diameter range of from 710 to 150 $\mu$m, thereby affording a dried particles (2).
While stirring 100 parts of the dried particles (2) at a high speed, 0.5 parts of sodium aluminum sulfate dodecahydrate (sodium alum) as a multivalent metal salt (e) and 5.00 parts of a 2% solution of ethylene glycol diglycidyl ether in a water/methanol mixed solvent (weight ratio of water/methanol = 70/30) were added thereto by spraying and mixed, and the resulting mixture was allowed to stand at 150°C for 30 minutes for surface-crosslinking, thereby affording water-absorbent resin particles (P-9). The weight average particle diameter of (P-9) was 400 $\mu$m.

<Example 8>

Water-absorbent resin particles (P-10) were obtained by performing the same operations as those of Example 1 except changing 14.1 parts of the decomposition product (B-1) to 14.1 parts of the decomposition product (B-4).

<Example 9>

Water-absorbent resin particles (P-11) were obtained by performing the same operations as those of Example 2 except changing 14.1 parts of the decomposition product (B-1) to 14.1 parts of the decomposition product (B-4).

<Example 10>

Water-absorbent resin particles (P-12) were obtained by performing the same operations as those of Example 2 except changing 14.1 parts of the decomposition product (B-1) to 14.1 parts of the decomposition product (B-5).

<Example 11>

Water-absorbent resin particles (P-13) were obtained by performing the same operations as those of Example 2 except changing 14.1 parts of the decomposition product (B-1) to 14.1 parts of the decomposition product (B-6).

<Example 12>

100 parts of the dried material obtained in Production Example 1 was pulverized with a juicing blender, and then 10 parts of the decomposition product (B-3) was added at the time of adjusting the particle diameter to a particle diameter range of from 710 to 150 $\mu$m, thereby affording a dried particles (3).
While stirring 100 parts of the dried particles (3) at a high speed, 0.5 parts of sodium aluminum sulfate dodecahydrate (sodium alum) as a multivalent metal salt (e) and 5.00 parts of a 2% solution of ethylene glycol diglycidyl ether in a water/methanol mixed solvent (weight ratio of water/methanol = 70/30) were added thereto by spraying and mixed, and the resulting mixture was allowed to stand at 150°C for 30 minutes for surface-crosslinking, thereby affording water-absorbent resin particles (P-14). The weight average particle diameter of (P-14) was 400 μm.

<Example 13>

Water-absorbent resin particles (P-15) were obtained by performing the same operations as those of Example 1 except changing 14.1 parts of the decomposition product (B-1) to 14.1 parts of the decomposition product (B-7).

<Example 14>

Water-absorbent resin particles (P-16) were obtained by performing the same operations as those of Example 2 except changing 14.1 parts of the decomposition product (B-1) to 14.1 parts of the decomposition product (B-7).

<Example 15>

Water-absorbent resin particles (P-17) were obtained by performing the same operations as those of Example 2 except changing 14.1 parts of the decomposition product (B-1) to 14.1 parts of the decomposition product (B-8).

<Example 16>

To 100 parts of the dried material particles (1) obtained in Production Example 1 was added 10 parts of the decomposition product (B-1) and the mixture was kneaded on a stainless steel tray so as to be uniform. Then, 0.5 parts of sodium aluminum sulfate dodecahydrate (sodium alum) as a multivalent metal salt (e) and 5.00 parts of a 2% solution of ethylene glycol diglycidyl ether in a water/methanol mixed solvent (weight ratio of water/methanol = 70/30) were added thereto by spraying and mixed, and the resulting mixture was allowed to stand at 150°C for 30 minutes for surface-crosslinking, thereby affording water-absorbent resin particles (P-18).

<Comparative Example 1>

To 90 parts of the water-absorbent resin particles (P-1) obtained in Production Example 1 was added 10 parts of the decomposition product (B-1), and the mixture was kneaded on a stainless steel tray so as to be uniform, thereby affording water-absorbent resin particles (H-1).

<Comparative Example 2>

To 95 parts of the water-absorbent resin particles (P-1) obtained in Production Example 1 was added 5 parts of the decomposition product (B-1), and the mixture was kneaded on a stainless steel tray so as to be uniform, thereby affording water-absorbent resin particles (H-2).

<Comparative Example 3>

To 90 parts of the water-absorbent resin particles (P-1) obtained in Production Example 1 was added 10 parts of the decomposition product (B-4), and the mixture was kneaded on a stainless steel tray so as to be uniform, thereby affording water-absorbent resin particles (H-3).

<Comparative Example 4>

To 90 parts of the water-absorbent resin particles (P-1) obtained in Production Example 1 was added 10 parts of the decomposition product (B-6), and the mixture was kneaded on a stainless steel tray so as to be uniform, thereby affording water-absorbent resin particles (H-4).

The evaluation results of the water retention capacity and the amount of absorption under load of the water-absorbent resin particles obtained in Production Examples, Examples, and Comparative Examples are shown in Table 1.

[Table 1]

|  | Water-absorbent resin particles | Water retention capacity (g/g) | Amount of absorption under load (g/g) |
|---|---|---|---|
| Production Example 1 | P-1 | 40.3 | 26.0 |

(continued)

| | Water-absorbent resin particles | Water retention capacity (g/g) | Amount of absorption under load (g/g) |
|---|---|---|---|
| Production Example 2 | P-2 | 40.0 | 24.9 |
| Example 1 | P-3 | 39.9 | 25.5 |
| Example 2 | P-4 | 40.2 | 25.0 |
| Example 3 | P-5 | 39.5 | 25.5 |
| Example 4 | P-6 | 39.7 | 25.6 |
| Example 5 | P-7 | 40.2 | 26.1 |
| Example 6 | P-8 | 40.3 | 24.9 |
| Example 7 | P-9 | 39.2 | 24.7 |
| Example 8 | P-10 | 39.5 | 25.5 |
| Example 9 | P-11 | 39.7 | 25.6 |
| Example 10 | P-12 | 39.8 | 24.7 |
| Example 11 | P-13 | 40.3 | 25.4 |
| Example 12 | P-14 | 40.0 | 25.4 |
| Example 13 | P-15 | 40.5 | 24.6 |
| Example 14 | P-16 | 39.8 | 26.3 |
| Example 15 | P-17 | 40.3 | 25.0 |
| Comparative Example 1 | H-1 | 39.9 | 16.2 |
| Comparative Example 2 | H-2 | 40.2 | 17.2 |
| Comparative Example 3 | H-3 | 41.4 | 14.9 |
| Comparative Example 4 | H-4 | 40.2 | 14.4 |
| Comparative Example 5 | H-5 | 39.5 | 18.0 |

As is apparent from the results shown in Table 1, the water-absorbent resin particles obtained by the production method of the present invention using the decomposition products of the water-absorbent resin particles shown in Examples are improved in water retention capacity and amount of absorption under load as compared with the water-absorbent resin particles obtained by adding the decomposition products to steps after surface-crosslinking shown in Comparative Examples. In addition, it is found that deterioration of absorption characteristics is suppressed also from the comparison of Production Example 1 in which a decomposition product of water-absorbent resin particles is not added with Examples of the present application.

From the present results, it can be said that the present invention is an efficient production method from the viewpoint of resource saving and reduction in environmental load because the obtained water-absorbent resin particles exhibit good absorption characteristics even when a decomposition product of water-absorbent resin particles, which is a waste of water-absorbent resin particles, is added in a step before the surface-crosslinking step and is recycled as a raw material.

INDUSTRIAL APPLICABILITY

The method for producing water-absorbent resin particles of the present invention can be suitably used for recycling waste of water-absorbent resin particles discharged when sanitary goods such as disposable diapers (disposable diapers for children, disposable diapers for adults, etc.), napkins (sanitary napkins, etc.), paper towels, pads (incontinence pads, surgical underpads, etc.), and pet sheets (pet urine absorbent sheets) are recycled.

**Claims**

1. A method for producing water-absorbent resin particles, the method comprising a polymerization step (I) of polymerizing a monomer composition comprising a water-soluble vinyl monomer (a1) and a crosslinking agent (b) to obtain a hydrous gel comprising a crosslinked polymer (A), a gel chopping step (II) of chopping the hydrous gel to obtain hydrous gel particles, a step (Va) of mixing resin particles comprising the crosslinked polymer (A) obtained from the hydrous gel particles with a surface-crosslinking agent (d), and a reaction step (Vb) of reacting with a surface-crosslinking agent (d), wherein a separately prepared decomposition product (B) of water-absorbent resin particles comprising a crosslinked polymer (A') comprising a water-soluble vinyl monomer (a1') and a crosslinking agent (b') as essential constitutional units that is obtained by treating said water-absorbent resin particles in a step of decomposing the water-absorbent resin particles by a mechanical action and/or a chemical action capable of breaking a chemical bond is added in at least one of stage of the polymerization step (I), the stage of the gel chopping step (II), and the stage of after the step (II) but before the surface-crosslinking reaction step (Vb).

2. The method for producing water-absorbent resin particles according to claim 1, wherein the decomposition product (B) is added in the polymerization step (I) and/or the gel chopping step (II).

3. The method for producing water-absorbent resin particles according to claim 1 or 2, wherein in the gel chopping step (II), the decomposition product (B) of water-absorbent resin particles is added before and/or at the same time as the gel chopping.

4. The method for producing water-absorbent resin particles according to any one of claims 1 to 3, wherein the water-solubles content of the decomposition product (B) of water-absorbent resin particles is 20% by weight or more.

5. The method for producing water-absorbent resin particles according to any one of claims 1 to 4, wherein the decomposition product (B) of water-absorbent resin particles is contained in an amount of 1 to 50% by weight relative to the total weight of the monomer composition.

6. The method for producing water-absorbent resin particles according to any one of claims 1 to 5, wherein the decomposition product (B) of water-absorbent resin particles is a decomposition product obtained by decomposition-treating water-absorbent resin particles comprising the crosslinked polymer (A') comprising the water-soluble vinyl monomer (a1') and the crosslinking agent (b') as essential constitutional units by at least one treatment method selected from the group consisting of oxidation treatment, photolysis treatment and hydrolysis treatment.

7. The method for producing water-absorbent resin particles according to claim 6, wherein the decomposition product (B) of water-absorbent resin particles is a decomposition product (B) obtained by decomposition treatment in water by a method involving oxidation treatment with a water-soluble redox agent.

8. The method for producing water-absorbent resin particles according to any one of claims 1 to 7, wherein the decomposition product (B) of water-absorbent resin particles is a decomposition product obtained from water-absorbent resin particles contained in used sanitary goods.

## INTERNATIONAL SEARCH REPORT

| International application No. |
|---|
| PCT/JP2020/010234 |

**A. CLASSIFICATION OF SUBJECT MATTER**
Int. Cl. C08J3/12(2006.01)i, C08F20/06(2006.01)i, C08J11/10(2006.01)n
FI: C08J3/12 Z CEY, C08F20/06, C08J11/10 ZAB

According to International Patent Classification (IPC) or to both national classification and IPC

**B. FIELDS SEARCHED**

Minimum documentation searched (classification system followed by classification symbols)
Int. Cl. C08J3/12, C08F20/06, C08J11/10

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)
Japio-GPG/FX JSTPlus (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2017-501295 A (HANWHA CHEMICAL CORP.) 12 | 1, 2, 4-6 |
| A | January 2017, claims, paragraphs [0042]-[0045], examples | 3, 7, 8 |
| A | JP 2000-084533 A (CHO, Takeshi) 28 March 2000, claims, paragraph [0009] | 1-8 |
| A | WO 2014/077619 A1 (KIMBERLY-CLARK WORLDWIDE, INC.) 22 May 2014, claims, page 1, lines 5-14 | 1-8 |
| A | JP 2013-520244 A (THE PROCTER & GAMBLE CO.) 06 June 2013, claims | 1-8 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05.06.2020 | 16.06.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2020/010234 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2013/141357 A1 (NATIONAL UNIVERSITY CORPORATION HOKKAIDO UNIVERSITY, UNICHARM CORPORATION) 26 September 2013, claims | 1-8 |
| P, A | WO 2019/087488 A1 (UNI-CHARM CORP.) 09 May 2019, claims | 1-8 |

Form PCT/ISA/210 (continuation of second sheet) (January 2015)

**INTERNATIONAL SEARCH REPORT**
Information on patent family members

International application No.

PCT/JP2020/010234

| Patent Documents referred to in the Report | Publication Date | Patent Family | Publication Date |
|---|---|---|---|
| JP 2017-501295 A | 12.01.2017 | US 2016/0332143 A1 claims, paragraphs [0040]-[0043], examples WO 2015/102463 A1 EP 3093298 A1 KR 10-2015-0082123 A TW 201533077 A | |
| JP 2000-084533 A | 28.03.2000 | (Family: none) | |
| WO 2014/077619 A1 | 22.05.2014 | US 2015/0307681 A1 EP 2919822 A1 KR 10-2014-0063116 A AU 2013345559 A CN 104955491 A MX 2015006153 A RU 2015121068 A BR 112015011151 A | |
| JP 2013-520244 A | 06.06.2013 | US 2011/0207837 A1 claims WO 2011/106646 A1 EP 2361741 A1 CA 2790852 A CN 102770252 A | |
| WO 2013/141357 A1 | 26.09.2013 | US 2015/0045461 A1 claims EP 2829320 A1 CN 104245119 A | |
| WO 2019/087488 A1 | 09.05.2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016000881 A
- JP 2017209675 A
- JP 4317784 A
- JP 6313008 A
- JP 2003321574 A
- JP 3648553 B
- JP 2003165883 A
- JP 2005075982 A
- JP 2005095759 A
- JP 55133413 A
- JP 54030710 B
- JP 56026909 A
- JP 1005808 A
- JP 59189103 A
- JP 58180233 A
- JP 61016903 A
- JP 61211305 A
- JP 61252212 A
- JP 5508425 A
- JP 11240959 A
- JP 51136588 A
- JP 61257235 A
- WO 201757709 A
- JP 2003225565 A
- JP 2006131767 A
- JP 2014217835 A
- JP 2013150977 A

### Non-patent literature cited in the description

- Perry's Chemical Engineers' Handbook. McGraw-Hill Book Company, 1984, 21